(19) Europäisches Patentamt
European Patent Office
Office européen des brevets

(11) EP 0 575 219 B1

(12) **FASCICULE DE BREVET EUROPEEN**

(45) Date de publication et mention de la délivrance du brevet: **04.09.1996 Bulletin 1996/36**

(51) Int. Cl.⁶: **C08F 8/40**

(21) Numéro de dépôt: **93401433.3**

(22) Date de dépôt: **04.06.1993**

(54) **Copolymères utilisables comme additifs multifonctionnels pour les lubrifiants et compositions lubrifiantes renfermant lesdits copolymères**

Copolymere verwendbar als multifunktionelle Schmierstoff-Additive und diese Copolymere enthaltende Schmiermittelzusammensetzungen

Copolymers to be used as multifunctional additives for lubricants and lubricant compositions containing these copolymers

(84) Etats contractants désignés:
**BE DE GB IT NL**

(30) Priorité: **16.06.1992 FR 9207395**

(43) Date de publication de la demande:
**22.12.1993 Bulletin 1993/51**

(73) Titulaire: **INSTITUT FRANCAIS DU PETROLE**
**F-92502 Rueil-Malmaison (FR)**

(72) Inventeurs:
- **Durand, Jean-Pierre**
  **F-78400 Chatou (FR)**
- **Keromest, Catherine**
  **F-76000 Rouen (FR)**
- **Born, Maurice**
  **F-92000 Nanterre (FR)**

(56) Documents cités:
**GB-A- 1 256 452**
**GB-A- 2 043 654**
**US-A- 3 070 581**

EP 0 575 219 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Rank Xerox (UK) Business Services
2.13.4/3.4

## Description

L'invention concerne des copolymères et terpolymères modifiés utilisables notamment comme additifs multifonctionnels pour les lubrifiants. Ils présentent des propriétés d'antiusure et d'améliorants de viscosité.

Les copolymères et terpolymères de base consistent en des copolymères éthylène-propylène et en des terpolymères éthylène-propylènediène (copolymères EPDM). Selon l'invention, ils sont modifiés de manière à fixer du soufre et du phosphore.

Les copolymères éthylène-propylène et les terpolymères éthylène-propylène-diène sont utilisés depuis longtemps pour améliorer la viscosité des huiles lubrifiantes. Ils sont préparés par copolymérisation d'éthylène et de propylène, et éventuellement d'un diène non conjugué, qui peut être du dicyclopentadiène, de l'1,4-hexadiène ou de l'éthylidène-norbornène, suivie le plus souvent d'une étape de dégradation mécanique de façon à obtenir un copolymère de masse moléculaire convenable.

Il a été proposé antérieurement des copolymères modifiés de façon à permettre simultanément l'amélioration de l'indice de viscosité des huiles lubrifiantes et la dispersion des boues qu'elles sont susceptibles de contenir en cours de service. De tels copolymères sont généralement obtenus par modification des copolymères éthylène-propylène soit par greffage de monomères dispersants azotés, soit par maléinisation et réaction avec des polyamines et/ou polyols. La préparation et l'utilisation de tels additifs sont décrites notamment dans les documents antérieurs suivants :

les brevets US-A-4 092 255, 4 146 489, 4 170 561 et 4 715 975,

la demande EP-A-225 048 et les brevets US-A-4 089 794, 4 137 185 et 4 144 181.

Il a été également proposé des copolymères ou des terpolymères modifiés de façon à permettre simultanémént l'amélioration de l'indice de viscosité, la dispersion des boues et la protection antioxydante. La préparation et l'utilisation de tels additifs sont décrites notamment dans les documents antérieurs suivants :

US-A-4 668 412, 4 904 404, 4 863 623 et 4 798 678.

Par ailleurs, le brevet US-A-4 502 972 décrit la préparation et l'utilisation comme additif pour les lubrifiants d'un polymère obtenu par traitement d'un terpolymère éthylène-propylène-diène avec du chlore, suivi d'une réaction avec un N,N - dialkyldithiocarbamate de sodium.

D'une façon générale, l'emploi d'additifs multifonctionnels permet d'éviter les problèmes de compatibilité des additifs, de simplifier la formulation des compositions lubrifiantes et d'obtenir des performances améliorées.

L'invention propose donc de nouveaux copolymères utilisables notamment comme additifs multifonctionnels dans les lubrifiants et qui présentent des propriétés améliorées dans cette utilisation.

Les copolymères selon l'invention, utilisables notamment comme additifs multifonctionnels dans les lubrifiants, peuvent être définis d'une façon générale comme étant obtenus par modification chimique de copolymères éthylène-propylène ou de terpolymères éthylène-propylènediène non conjugué, de façon à fixer des groupements contenant du soufre et du phosphore.

Les copolymères polyoléfiniques utilisés pour une telle modification dans la présente invention ont une teneur en éthylène comprise entre 40 et 70 % moles et une masse moléculaire moyenne en nombre comprise ente 30 000 et 120 000 avec un indice de polydispersité $\overline{M}_p/\overline{M}_n$ d'environ 1,5 à 5. De tels produits peuvent être préparés soit directement par polymérisation soit par dégradation contrôlée thermique et/ou mécanique de copolymères de masses moléculaires plus élevées.

Les copolymères modifiés de l'invention sont obtenus par toutes techniques permettant d'implanter du soufre et du phosphore sur le substrat polyoléfinique envisagé. Le plus souvent et selon un mode opératoire préféré, les copolymères polyoléfiniques seront fonctionnalisés par fixation de groupements tels qu'acide, anhydride, époxyde, etc, avant modification par des composés phosphosoufrés.

L'implantation de groupements anhydrides, par exemple, peut être réalisée par réaction de copolymères éthylène-propylène ou de terpolymères éthylène-propylène-diène avec l'anhydride maléique en solution ou en masse, thermiquement ou en présence d'initiateurs radicalaires, dans des conditions décrites antérieurement.

L'implantation de groupements époxydes peut être réalisée soit par greffage de monomères insaturés contenant un groupement époxy, tels que par exemple, l'acrylate ou le méthacrylate de glycidyle, sur des copolymères éthylène-propylène ou sur des terpolymères éthylène-propylène-diène ou encore par époxydation de copolymères éthylène-propylène-diène.

Les composés phosphosoufrés susceptibles de réagir sur les copolymères ou les terpolymères fonctionnalisés par des groupements anhydrides sont plus particulièrement des alcools phosphosoufrés répondant à la formule générale :

$$(RO-)_2\ P(S)S - CH_2 - CHR' - OH \qquad (1)$$

ou à la formule générale :

$$\left((RO-)_2\ P(S)S - CH_2 - CHR' - O-\right)_2\ P(S)S - CH_2 - CHR' - OH \qquad (2)$$

dans lesquelles R représente un radical alkyle renfermant par exemple de 1 à 30 atomes de carbone et R' représente un atome d'hydrogène ou un radical alkyle renfermant par exemple de 1 à 30 atomes de carbone.

D'autre part, les composés phosphosoufrés susceptibles de réagir sur les copolymères ou les terpolymères fonctionnalisés par des groupements époxy sont plus particulièrement des acides phosphosoufrés répondant à la formule générale :

$$(RO-)_2\ P(S)\ SH \qquad (3)$$

ou à la formule générale :

$$\left((RO-)_2\ P(S)S - CH_2 - CHR' - O-\right)_2\ P(S)SH \qquad (4)$$

dans lesquelles R et R' ont chacun la même signification que pour les formules (1) et (2) présentées plus haut.

Les acides phosphosoufrés (acides dialkyldithiophosphoriques) de formule générale (3) peuvent être préparés par réaction d'alcools primaires ou secondaires ROH ou d'alkylphénols R-Ar-OH avec du pentasulfure de diphosphore ($P_2 S_5$ ou $P_4 S_{10}$).

Les alcools phosphosoufrés de formule générale (1) peuvent être préparés par réaction d'un acide de formule générale (3) avec un composé époxydé

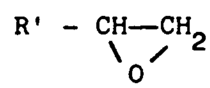

(qui est par exemple l'oxyde d'éthylène, lorsque R' représente un atome d'hydrogène).

Les acides phosphosoufrés de formule générale (4) (acides "dialkyldithiophosphyldithiophosphoriques") peuvent être préparés à partir des alcools de formule générale (1) par réaction sur ceux-ci de pentasulfure de diphosphore ($P_2 S_5$ ou $P_4 S_{10}$).

Enfin, les alcools phosphosoufrés de formule générale (2) peuvent être préparés par réaction d'un acide de formule générale (4) avec un composé époxydé

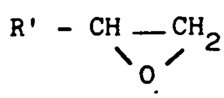

(qui est par exemple l'oxyde d'éthylène, lorsque R' représente un atome d'hydrogène).

Les méthodes de préparation qui peuvent être mises en oeuvre sont bien connues de l'art antérieur : on en trouve des descriptions notamment dans les brevets américains détenus par la demanderesse : US-A-4 766 228 et US-A-4 882 446.

Dans la pratique, pour préparer les copolymères et terpolymères modifiés de l'invention à partir de copolymères ou de terpolymères maléinisés (c'est-à-dire comportant des motifs dérivant de l'anhydride maléique), on utilisera de préférence des alcools phosphosoufrés répondant à la formule (1) ou (2) dans lesquels R représente plus particulièrement un radical isopropyle et R' représente plus particulièrement un atome d'hydrogène ; on fait alors réagir l'alcool phosphosoufré avec ledit copolymère ou terpolymère maléinisé dans un solvant tel que par exemple le toluène, à une température généralement comprise entre 40 et 130°C de préférence entre 80 et 120°C.

Dans les cas où les copolymères modifiés de l'invention sont obtenus à partir de copolymères contenant des groupements époxydes, la réaction entre de tels copolymères et l'acide phosphosoufré répondant à la formule (3) ou (4)

sera réalisée dans un solvant tel que le toluène ou le xylène à une température comprise entre 20 et 60°C et de préférence entre 30 et 50°C.

Les copolymères et terpolymères modifiés de l'invention ont en général une teneur en phosphore allant de 0,2 à 2 % en masse et une teneur en soufre de 0,4 à 4 % en masse.

Dans leur utilisation comme additifs multifonctionnels dans les huiles lubrifiantes (tant minérales que synthétiques), ils sont ajoutés aux huiles à des concentrations allant en général de 0,25 à 10 % en masse, de préférence de 0,5 à 5 % en masse.

Les compositions lubrifiantes ainsi constituées renferment en général entre 10 et 10 000 ppm, de préférence entre 50 et 500 ppm, de phosphore.

Les exemples suivants illustrent l'invention mais ne doivent en aucune manière être considérés comme limitatifs. Les formulations A et C de l'exemple 4 ont été testées à titre comparatif.

Exemple 1 :

Dans un réacteur de 1 litre équipé d'un système d'agitation, d'un réfrigérant et d'une circulation d'azote, on introduit 30 g de copolymère éthylène-propylène maléinisé en solution dans 300 g de toluène. Les caractéristiques du copolymère utilisé sont les suivantes:

* teneur en éthylène : 53 % mole
* indice d'anhydride : 0,06 équivalent anhydride / 100 g
* masse moléculaire moyenne en nombre $\overline{M}_n$ : 48 000 ($\overline{M}_p$ / $\overline{M}_n$ = 2,5)

A ce mélange, on ajoute 32,5 g d'alcool diisopropyldithiophosphorique et la solution réactionnelle est chauffée au reflux du toluène pendant 70 heures. Le copolymère modifié est isolé par précipitation dans l'acétone du mélange réactionnel dont on a au préalable éliminé les 2/3 du toluène par évaporation sous pression réduite. Aprés lavages à l'acétone et séchage, on obtient un copolymère éthylène-propylène modifié contenant 1,16 % masse de phosphore et 2,55 % masse de soufre.

Exemple 2 :

Si dans l'exemple 1, toutes choses étant égales par ailleurs, la durée de la réaction est limitée à 24 heures, on obtient un copolymère modifié contenant 0,9 % masse de phosphore et 1,82 % masse de soufre.

Exemple 3 :

Si dans l'exemple 1, toutes choses étant égales par ailleurs, on ajoute 4,8 g d'alcool diisopropyldithiophosphorique au lieu de 30 g, on obtient au bout de 40 heures de réaction un copolymère éthylène-propylène modifié contenant 0,89 % masse de phosphore et 1,86 % masse de soufre.

Exemple 4 :

Dans cet exemple, le pouvoir antiusure et extrême-pression de compositions lubrifiantes contenant comme huile de base une huile minérale 175 N et comme additif améliorant de viscosité les copolymères modifiés des exemples 1 et 2, a été évalué comparativement à celui d'une composition lubrifiante à base d'huile minérale 175 N et contenant comme améliorant de viscosité le copolymère éthylène-propylène ayant servi à la préparation du copolymère modifié dans l'exemple 1 et comme additif antiusure un dialkyldithiophosphate de zinc couramment utilisé. La concentration des additifs dans les différentes compositions lubrifiantes préparées a été choisie de façon à obtenir des formulations ayant la même viscosité et la même teneur en soufre et phosphore. L'évaluation des propriétés antiusure et extrême-pression de ces compositions lubrifiantes a été réalisée à l'aide de la machine 4 billes de SHELL dans les conditions des 3 essais normalisés suivants : ASTM D 2783, NFE 48-617 et PEUGEOT SA/RENAULT D55 1 136. La composition des différentes formulations considérées et les performances obtenues sont rassemblées dans le tableau 1 dont l'examen montre clairement l'amélioration des propriétés antiusure et extrême-pression résultant de l'utilisation des copolymères modifiés de l'invention.

Tableau 1

| FORMULATIONS | A | B | C | D | E |
|---|---|---|---|---|---|
| Huile Minérale 175 N (% masse) | 100 | 98 | 97,8 | 98 | 98 |
| Copolymère EP[a] (% masse) | 0 | 0 | 2 | 1 | 0 |
| Copolymère Ex.1[b] (% masse) | 0 | 2 | 0 | 1 | 0 |
| Copolymère Ex.2[c] (% masse) | 0 | 0 | 0 | 0 | 2 |
| Additif[d](% masse) | 0 | 0 | 0,2 | 0 | 0 |
| Teneur P (ppm) | 0 | 227 | 193 | 115 | 180 |
| Viscosité à 100°C ($mm^2/s$) | | 13 | 12,2 | | 12,6 |
| Essais extrême-pression : norme ASTM D 2783 | | | | | |
| Charge avant grippage (kg) | 40 (392,4 N) | 100 (981 N) | 100 (981 N) | 100 (981 N) | 100 (981 N) |
| Charge de soudure (kg) | 126 (1236 N) | 220 (2158 N) | 220 (2158 N) | 210 (2060 N) | 220 (2158 N) |
| ICU (kg) | 17,6 172,6 N) | 43,5 (426,7 N) | 44 (431,6 N) | 43,5 (426,7 N) | 44 (431,6 N) |
| Essais anti-usure : NF E 48.617 | | | | | |
| | Diamètre d'empreinte (mm) aprés 1 h sous charge de : | | | | |
| 40 kg (392,4 N) | 0.93 | 0.47 | 0.76 | 0.42 | 0.46 |
| 60 kg (588,6 N) | 1.99 | 0.56 | 1.85 | 0.77 | 0.57 |
| 80 kg (784,8 N) | 2.30 | 0.78 | 2.18 | 2.24 | 0.80 |
| Essais Peugeot SA/Renault D55 1136 | | | | | |
| Charge avant grippage (kg) | | 110 (1079 N) | 70 (686,7 N) | 100 (981 N) | 110 (1079 N) |
| Point A (kg) | | 120 (1177 N) | 80 (784,8 N) | 90 (882,9 N) | 120 (1177 N) |

(a) Copolymère èthylène-propylène non modifiè (èthylène : 53 % mole, $\overline{M}_p$ = 120 000 et $\overline{M}_p/\overline{M}_n$ = 2,5 )
(b) Copolymère modifiè prèparè dans l'exemple 1.
(c) Copolymère modifiè prèparè dans l'exemple 2.
(d) Diakyldithiophosphate de zinc commercial (P : 9,2 % en masse)

## Revendications

1. Copolymère polyoléfinique, utilisable comme additif multifonctionnel pour lubrifiants, consistant en un copolymère polyoléfinique à base d'éthylène, de propylène et éventuellement d'un diène non conjugué, modifié de façon à contenir du soufre et du phosphore. caractérisé en ce qu'il est choisi parmi les copolymères

obtenus par estérification d'un copolymère éthylène-propylène ou d'un terpolymère éthylène-propylène-diène contenant des groupements anhydrides succiniques fixés, avec un alcool phosphosoufré de formule générale :

$$(RO-)_2\ P(S)S - CH_2 - CHR' - OH \qquad (1)$$

ou à la formule générale :

$$\left((RO-)_2\ P(S) - CH_2 - CHR' - O-\right)_2 P(S)S - CH_2 - CHR' - OH \qquad (2)$$

où R représente un radical alkyle renfermant de 1 à 30 atomes de carbone et R' représente un atome d'hydrogène ou un radical alkyle renfermant de 1 à 30 atomes de carbone ; et les copolymères

obtenus par réaction d'un copolymère éthylène-propylène ou d'un terpolymère éthylène-propylène-diène, contenant des groupements époxydes, avec un acide dialkyl- et/ou dialkylaryldithiophosphorique de formule générale :

$$(RO-)_2\ P(S)SH \qquad (3)$$

ou à la formule générale :

$$\left((RO-)_2\ P(S)S - CH_2 - CHR' - O-\right)_2 P(S)SH \quad (4)$$

où R représente un radical alkyle renfermant de 1 à 30 atomes de carbone et R' représente un atome d'hydrogène ou un radical alkyle renfermant de 1 à 30 atomes d'hydrogène.

2. Copolymère selon la revendication 1 , caractérisé en ce qu'il est obtenu à partir d'un copolymère à base d'éthylène, de propylène et éventuellement de diène dont la teneur en éthylène est comprise entre 40 et 70 % mole et la masse moléculaire moyenne en nombre est comprise entre 30 000 et 120 000, et l'indice de polydispersité est de 1,5 à 5.

3. Copolymère selon l'une des revendications 1 et 2, caractérisé en ce que dans les formules générales (1), (2), (3) et (4), R est un radical isopropyle et R' un atome d'hydrogène.

4. Copolymère selon l'une des revendications 1 à 3, caractérisé en ce qu'il posséde une teneur en phosphore et en soufre respectivement comprise entre 0,2 et 2 % masse et entre 0,4 et 4 % masse.

5. Composition lubrifiante caractérisée en ce qu'elle renferme une proportion majeure d'huile lubrifiante d'origine minérale ou synthétique et, à titre d'additif, une proportion de 0,25 à 10 % en masse d'au moins un copolymère selon l'une des revendications 1 à 4.

6. Composition lubrifiante selon la revendication 5, caractérisée en ce que ladite proportion de copolymère est de 0,5 à 5 % en masse.

7. Composition lubrifiante selon l'une des revendications 5 et 6, caratérisée en ce qu'elle renferme de 10 à 10 000 ppm de phosphore provenant dudit copolymère.

8. Composition lubrifiante selon la revendication 7, caractérisée en ce que la proportion de phosphore provenant dudit copolymère est de 50 à 500 ppm.

## Claims

1. Polyolefin copolymer usable as a multifunctional additive for lubricants, comprising a polyolefin copolymer based on ethylene, propylene and optionally an unconjugated diene, modified so as to contain sulphur and phosphorus, characterised in that it is chosen from among copolymers obtained by the esterification of an ethylene-propylene copolymer or an ethylene-propylene-diene terpolymer containing fixed succinic anhydride groups, with a phosphorosulphur alcohol of general formula:

$$(RO-)_2\ P(S)S - CH_2 - CHR' - OH \qquad (1)$$

or general formula:

$$\left((RO-)_2\ P(S)S-CH_2-CHR'-O-\right)_2 P(S)S-CH_2-CHR'-OH \quad (2)$$

in which R represents an alkyl radical containing 1 to 30 carbon atoms and R' represents a hydrogen atom or an alkyl radical containing 1 to 30 carbon atoms and the copolymers obtained by the reaction of an ethylene-propyene copolymer or an ethylene-propylene-diene terpolymer, containing epoxide groups, with a dialkyl and/or dialkyl aryldithiophosphoric acid of general formula:

$$(RO-)_2\ P(S)SH \quad (3)$$

or the general formula:

$$\left((RO-)_2\ P(S)S-CH_2-CHR'-O-\right)_2 P(S)SH \quad (4)$$

in which R represents an alkyl radical containing 1 to 30 carbon atoms and R' represents a hydrogen atom or an alkyl radical containing 1 to 30 hydrogen atoms.

**2.** Copolymer according to claim 1, characterized in that it is obtained from a copolymer based on ethylene, propylene and optionally diene, whose ethylene content is between 40 and 70 mole % and whose number average molecular weight is between 30,000 and 120,000, the polydispersity index being 1.5 to 5.

**3.** Copolymer according to anyone of the claims 1 to 2, characterized in that in the general formulas (1), (2), (3) and (4), R is an isopropyl radical and R' a hydrogen atom.

**4.** Copolymer according to anyone of the claims 1 to 2, characterized in that it has a phosphorus and a sulphur content respectively between 0.2 and 2% by weight and 0.4 and 4% by weight.

**5.** Lubricating composition, characterized in that it contains a major proportion of lubricating oil having a mineral or synthetic origin and, as an additive, a proportion of 0.25 to 10% by weight of at least one copolymer according to anyone of the claims 1 to 4.

**6.** Lubricating composition according to claim 5, characterized in that said copolymer proportion is 0.5 to 5% by weight.

**7.** Lubricating composition according to anyone of the claims 5 to 6, characterized in that it contains 10 to 10,000 ppm of phosphorus coming from said copolymer.

**8.** Lubricating composition according to claim 7, characterized in that the phosphorus proportion from said copolymer is 50 to 500 ppm.

**Patentansprüche**

**1.** Polyolefinisches Copolymer, das als multifunktionelles Additiv für Schmiermittel verwendbar ist, bestehend aus einem polyolefinischen Copolymer auf Basis von Ethylen, Propylen und gegebenenfalls einem nicht konjugierten Dien, das in der Weise modifiziert ist, Schwefel und Phosphor zu enthalten, dadurch gekennzeichnet, daß es aus Copolymeren
ausgewählt wird, welche durch Verestern eines Ethylen-Propylen-Copolymers oder eines Ethylen-Propylen-Dien-Terpolymers, die gebundene Succinsäureanhydridgruppen enthalten, mit einem phosphorschwefelhaltigen Alkohol der allgemeinen Formel:

$$(RO-)_2P(S)S-CH_2-CHR'-OH \quad (1)$$

oder der allgemeinen Formel:

$$((RO-)_2P(S)S-CH_2-CHR'-O-)_2P(S)S-CH_2-CHR'-OH \qquad (2)$$

entsprechen, erhalten werden, worin R einen 1 bis 30 Kohlenstoffatome umfassenden Alkylrest darstellt und R' ein Wasserstoffatom oder ein 1 bis 30 Kohlenstoffatome umfassender Alkylrest ist,
und den Copolymeren,
welche durch Umsetzung eines Ethylen-Propylen-Copolymers oder eines Ethylen-Propylen-Dien-Terpolymers, welche Epoxidgruppen enthalten, mit einer Dialkyl- und/oder Dialkylaryldithiophosphorsäure der allgemeinen Formel:

$$(RO-)_2P(S)SH \qquad (3)$$

oder der allgemeinen Formel:

$$((RO-)_2P(S)S-CH_2-CHR'-O-)_2P(S)SH \qquad (4)$$

entsprechen, erhalten werden, worin R einen 1 bis 30 Kohlenstoffatome Umfassenden Alkylrest darstellt und R' ein Wasserstoffatom oder ein 1 bis 30 Kohlenstoffatome umfassender Alkylrest ist.

2. Copolymer nach Anspruch 1, dadurch gekennzeichnet, daß es aus einem Copolymer auf Basis von Ethylen, Propylen und gegebenenfalls Dien erhalten wird, dessen Gehalt an Ethylen zwischen einschließlich 40 und 70 Mol% enthalten ist und die zahlenmittlere Molekularmasse zwischen einschließlich 30000 und 120000 liegt und die Polydispersitätszahl 1,5 bis 5 beträgt.

3. Copolymer nach einem der Ansprüche 1 und 2, dadurch gekennzeichnet, daß in den allgemeinen Formeln (1), (2), (3) und (4) R ein Isopropylrest und R' ein Wasserstoffatom ist.

4. Copolymer nach einem der Ansprüche 1 bis 3, dadurch gekennzeichnet, daß es einen Gehalt an Phosphor bzw. an Schwefel enthält, der zwischen einschließlich 0,2 und 2 Masse% bzw. 0,4 und 4 Masse% liegt.

5. Schmiermittelzusammensetzung, dadurch gekennzeichnet, daß sie einen Hauptanteil Schmieröl mineralischen oder synthetischen Ursprungs und als Additiv einen Anteil von 0,25 bis 10 Masse% wenigstens eines Copolymers gemäß einem der Ansprüche 1 bis 4 umfaßt.

6. Schmiermittelzusammensetzung nach Anspruch 5, dadurch gekennzeichnet, daß der Anteil an Copolymer 0,5 bis 5 Masse% beträgt.

7. Schmiermittelzusammensetzung nach einem der Ansprüche 5 bis 6, dadurch gekennzeichnet, daß sie 10 bis 10000 ppm von aus dem Polymer stammendem Phosphor umfaßt.

8. Schmiermittelzusammensetzung nach Anspruch 7, dadurch gekennzeichnet, daß der aus dem Copolymer stammende Anteil von Phosphor 50 bis 500 ppm beträgt.